# EUROPÄISCHE PATENTSCHRIFT

(11) **EP 2 913 652 B1**
(45) Veröffentlichungstag und Bekanntmachung des Hinweises auf die Patenterteilung: **05.07.2017**
(21) Anmeldenummer: 15163403.7
(22) Anmeldetag: 16.01.2009
(51) Int. Cl.: G01M 3/24, G01F 1/66

(54) **VERFAHREN ZUR ÜBERWACHUNG UND/ODER ORTUNG VON FLÜSSIGKEITSVERLUSTEN IN EINEM ROHRLEITUNGSNETZ**
METHOD FOR MONITORING AND/OR LOCATING FLUID LOSSES IN A PIPE NETWORK
PROCÉDÉ DE CONTRÔLE ET/OU DE LOCALISATION DE FUITES DE FLUIDE DANS UN RÉSEAU DE TUYAUTERIE

(30) Priorität: 02.05.2008 DE 102008021929
(43) Veröffentlichungstag der Anmeldung: 02.09.2015
(62) Teilanmeldung aus: 09737909.3
(73) Patentinhaber: RBS Wave GmbH, 70173 Stuttgart (DE)
(72) Erfinder: Kober, Erwin, 70192 Stuttgart (DE)
(74) Vertreter: DREISS Patentanwälte PartG mbB

(56) Entgegenhaltungen:
- EP-A- 0 009 263
- EP-A1- 2 271 907
- DE-A1- 10 329 909
- DE-A1- 19 528 287
- DE-A1- 19 819 258
- US-A- 3 869 915
- US-A- 4 930 358
- US-A- 5 463 905

## Beschreibung

Die Erfindung betrifft ein Verfahren zur Überwachung und/oder Ortung von Wasserverlusten in einem Wasserrohrleitungsnetz mit mehreren Ganglinien, welches insbesondere zum Einsatz in Verteilnetzen der Trinkwasserversorgung geeignet ist.

Durch Rohrbrüche oder undichte Abschnitte in Flüssigkeitsleitungen, insbesondere Wasserleitungen, oder im Bereich der Endverbraucher können erhebliche Verluste auftreten. Da die Rohrleitungen der Wasserversorgungsnetze unterirdisch verlegt sind, können die Leckverluste nicht ohne Weiteres sofort identifiziert werden.

Aus der EP A0009263 sind ein Verfahren zur Leckortung in vermaschten Leitungsnetzen sowie ein dabei verwendbarer Messschacht beschrieben. Dabei werden Kontrollstellen aufgebaut, an denen die Durchfließeigenschaften gleichzeitig und jeweils über eine bestimmte kurze Zeit für das ganze Leitungssystem regelmäßig und gleichzeitig erfasst werden können. An allen Kontrollstellen ist ein eigens dafür vorgesehener Kontrollschacht herzustellen, wobei dadurch die bestehenden Leitungen unterbrochen werden müssen, um Schieber, Messeinrichtungen oder Wasserzähler einsetzen zu können. Eine nachträgliche Ausstattung eines Wasserversorgungssystems mit einer solchen Einrichtung ist somit nicht möglich.

Die DE 19819258 C2 beschreibt ein Verfahren zur Durchführung von Messungen für die Feststellung von Wasserverlusten und die Ortung der Leckstellen in Wasserversorgungssystemen unter Einsatz von Messsonden, die in regelmäßigen oder unregelmäßigen Abständen oder ständig eine Messung des Durchflusses, des Druckes und des Fließgeräusches an Messstellen durchführen. Dabei erfolgt die Analyse mittels eines Auswertegerätes auf der Basis eines Null-Verbrauchs und von Daten bezüglich des Wasserdrucks, des Fließgeräusches sowie der Durchflussmenge und der Durchflussrichtung zur Ortung einer Leckstelle. Die Messelemente der dabei verwendeten Messsonde sind in eine hülsenartige Gewindespindel eingesetzt, wobei diese Gewindespindel in eine Anbohrstelle eingedreht oder eindrehbar ist.

Die bekannten Verfahren bzw. Systeme haben die Nachteile, dass Bohrungen oder Schnitte in die Rohrleitungen erforderlich sind, eine Querschnittsverengung an den Einbaustellen auftritt und eine verschleiß- und wartungsfreie Messung nicht oder nur eingeschränkt möglich ist. Andere Lösungen sind bekannt. Z.B. offenbart das Dokument DE10329909 ein Verfahren zur Überwachung und/oder Ortung von Wasserverlusten in einem Wasserrohrleitungsnetz mit mehreren Ganglinien.

Die Aufgabe der vorliegenden Erfindung bestand somit darin, ein Verfahren bereitzustellen, das eine effiziente Überwachung eines Rohrleitungsnetzes ermöglicht, wobei eine zuverlässige und zeitnahe Detektion von Leckstellen, eine einfache Installation unter Betriebsbedingungen, eine zentrale Auswertung der Daten sowie eine nicht invasive Installation an Rohrleitungen unabhängig vom Rohrmaterial ermöglicht.

Die Aufgabe wurde durch ein Verfahren zur Überwachung und/oder Ortung von Wasserverlusten in einem Wasserrohrleitungsnetz mit mehreren Ganglinien gelöst, wobei das Verfahren mindestens folgende Schritte umfasst:
- Positionierung von Messeinheiten an ausgewählten Stellen des Rohrleitungsnetzes, wobei eine Messeinheit jeweils aus zwei gleichzeitig als Sender und Empfänger arbeitenden Sensoren besteht, welche entlang der Rohrachse auf der Außenseite, vorzugsweise auf Kämpferhöhe, eines Rohres angebracht sind,
- Messung der Strömungsgeschwindigkeit der Flüssigkeit im Rohr mit Hilfe des Ultraschallmessverfahrens, wobei ein erster Ultraschallimpuls durch die Flüssigkeit in Strömungsrichtung sowie ein zweiter Ultraschallimpuls entgegen der Strömungsrichtung gesendet wird, die Sensoren abwechselnd als Sender und Empfänger arbeiten und die Strömungsgeschwindigkeit aus der Laufzeitdifferenz Δt der Schallsignale in Strömungsrichtung und der Schallsignale entgegen der Strömungsrichtung bestimmt wird,

- Übertragung der Messdaten an eine Datenbank einer zentralen Rechnereinheit mit Hilfe eines an die jeweilige Messeinheit angeschlossenen Datenübertragungsmoduls und,
- Auswertung der Messdaten in der zentralen Rechnereinheit, indem die Messdaten der Ganglinien mit dem charakteristischen Nachtminimum ausgewertet werden, wobei die Ganglinien auf die minimal gemessenen Werte hin untersucht werden, die, vorzugsweise fünf, geringsten Werte gemittelt werden und die so identifizierten Wasserbewegungen während der verbrauchsschwachen Nachtstunden auf Leckverluste hinweisen.

Das erfindungsgemäße Messverfahren ist für alle Rohrmaterialien sowie alle Rohrdimensionen tauglich, besitzt eine hohe Messgenauigkeit (V=0,0025 m/s), zeichnet sich durch eine niedrige Messschwelle von weniger als 1 cm/s und eine hohe Reproduzierbarkeit der Messergebnisse aus, ermöglicht eine einfache Montage, insbesondere ohne Bohrungen oder Schnitte in die Rohrleitungen, vermeidet Querschnittsverengungen an den Einbaustellen und gewährleistet eine verschleiß- und wartungsfreie Messung ohne notwendige Zonierung.

Die Sensoren können nebeneinander mit einem Abstand voneinander auf der gleichen Seite des Rohres angeordnet sein oder auf gegenüberliegenden Seiten des Rohres versetzt montiert sein.

Das erfindungsgemäße Verfahren kann insbesondere verwendet werden, um Wasserverluste in einem Trinkwasserrohrleitungsnetz zu überwachen und/oder zu orten. Das Verfahren kann beispielsweise einen Rohrnetzbetreiber bei der Überwachung des Verteilnetzes auf Rohrbrüche und sonstige Leckstellen unterstützen. Bei einer vorteilhaften Ausgestaltung des Verfahrens werden in der zentralen Rechnereinheit die Messdaten der Ganglinien mit dem charakteristischen Nachtminimum ausgewertet, wobei die Ganglinien auf die minimal gemessenen Werte hin untersucht werden, die, vorzugsweise fünf, geringsten Werte gemittelt werden und die so identifizierten Wasserbewegungen während der verbrauchsschwachen Nachtstunden auf Leckverluste hinweisen. Dabei können insbesondere Aussagen zum Netzzustand und/oder seinen Veränderungen erfolgen und/oder eine Quantifizierung der Leckagemengen erfolgen, indem die Messdaten der einzelnen Messeinheiten und/oder davon abgeleitete Daten mit in der Vergangenheit aufgenommenen Messdaten verglichen werden.

Die Übertragung der Messdaten vom Datenübertragungsmodul der einzelnen Messeinheiten an eine zentrale Rechnereinheit erfolgt vorzugsweise über ein öffentliches Mobilfunknetz, beispielsweise GSM. Das Datenübertragungsmodul ist vorzugsweise ein GSM-Modem mit Antenne. Die Lage einer Leckstelle kann besonders vorteilhaft auf einen Teilbereich des Rohrleitungsnetzes örtlich eingegrenzt werden, indem Messdaten benachbarter Messeinheiten gemeinsam ausgewertet werden. Die Messeinheiten sind im Rohrleitungssystem vorzugsweise in einem Abstand von 5 bis 20 Kilometern voneinander angebracht und die Strömungsgeschwindigkeit im Rohr wird permanent gemessen. Dabei wird jede Sekunde ein Messwert gespeichert.

Bei einer vorteilhaften Weiterentwicklung des Verfahrens werden aus den Messdaten der Messeinheiten jeweils der minimal und maximal aufgetretene Flüssigkeitsdurchfluss sowie ein Mittelwert ermittelt. In einer Rechnereinheit an der Messeinheit werden gemäß einer vorteilhaften Ausführungsvariante die Volumenströme berechnet und als komprimierte, mit einem Zeitstempel versehene Datenpakete im SMS-Format an die zentrale Rechnereinheit versandt. Weiterhin können alle Daten-SMS an eine Empfangszentrale geleitet werden oder die zentrale Sammlung und Aufbereitung von Daten und/oder der Abruf von Ereignissen via Internetverbindung erfolgen. Besondere Vorteile ergeben sich aus einer Kombination einer ersten Stufe, umfassend die oben genannte Identifizierung und grobe Ortung eines Flüssigkeitsverlustes im Rohrleitungsnetz, mit einer zweiten Stufe, in welcher eine weitere örtliche Eingrenzung einer Leckage mithilfe einer flächigen Geräuschpegelmessung in dem als potenziellem Leckbereich ausgewiesenen Teil des Rohrleitungsnetzes vorgenommen wird. Weiterhin kann in einer dritten Stufe die Einortung der Leckstelle in dem weitestgehend eingegrenzten Netzbereich mit weiteren Verfahren der Leckortung, vorzugsweise der Korrelation, erfolgen.

Somit kann das erfindungsgemäße Verfahren besonders vorteilhaft in einem dreistufigen Ansatz durchgeführt werden: Die erste Stufe stellt die permanente Verlustüberwachung des Gesamtnetzes durch automatisierte Systeme dar. Hierzu gehören die Behälterauslaufmessungen und eventuell im Verteilnetz installierte Zonenzuflussmessungen. Das derart bestehende Messnetz wird durch die Installation der erfindungsgemäßen Messeinheiten verdichtet. Die so vorgenommene Überwachung liefert einen tagesaktuellen Überblick über den Netzzustand und eventuell auftretende Veränderungen. Gleichzeitig kann dieses Überwachungssystem in Abhängigkeit von der Dichte der Messeinrichtungen Aussagen zum Auftreten einzelner Leckagen, zur Leckgröße und -position mit eingeschränkter Genauigkeit liefern. Das Ergebnis dieser ersten Stufe ist die frühzeitige Identifizierung einer Leckage im Verteilnetz und eine grobe Vorortung der Leckstelle auf einzelne Netzbereiche.

Daran kann sich eine zweite Stufe anschließen. In dem als potenziellem Leckbereich ausgewiesenen Teil des Wasserverteilnetzes können zur weiteren Eingrenzung der Leckage unterstützende Maßnahmen wie die flächige Geräuschpegelmessung vorgenommen werden. Ergebnis der zweiten Stufe ist eine weitere Eingrenzung der Leckposition.

In einer dritten Stufe erfolgt nun die Einortung der Leckstelle in dem weitestgehend eingegrenzten Netzbereich mit herkömmlichen Verfahren der Leckortung, wie beispielsweise der Korrelation. Daran schließt sich die Reparatur der Leckage an. Die sequenzielle Abfolge dieser drei Teilschritte liegt unter anderem in den unterschiedlichen Kosten, die ihre Anwendung verursacht bzw. begründet. Die spezifischen Kosten zur Anwendung der drei Verfahren steigen stark an. Durch die weitestgehende Einschränkung der teuren Verfahren auf relevante Netzbereiche kann der betriebliche Aufwand deutlich gesenkt werden. Daneben ist eine signifikante Beschleunigung der Leckidentifikation möglich. Die Durchflussmessung erfolgt im Ultraschallmessverfahren durch Auswertung der Laufzeitdifferenzen zweier entgegengesetzt durch das Medium laufender Ultraschallsignale. Bei der Installation erfolgt die Anbringung der Sensorköpfe im Durchstrahlmodus benachbart auf der Außenseite des Rohres auf Kämpferhöhe. Die Ultraschalldurchflussmessung lässt sich auf allen in der Trinkwasserversorgung verwendeten Rohrmaterialien, wie Grauguss, Duktilguss, Stahl, Kunststoffe (PE, PEh, PEX, PVC) oder Asbestzement, auch bei außen beschichteten oder innen ausgekleideten Rohren einsetzen. Das Verfahren kann bei Leitungsdimensionen mit Außendurchmessern von 90 mm bis 330 mm verwendet werden, aber auch größere Rohrdimensionen können bei Einsatz entsprechend leistungsstarker Sensorköpfe überwacht werden. Das Verfahren ist besonders geeignet, geringe Fließgeschwindigkeiten zuverlässig zu erkennen. Die Messschwelle des Systems liegt bei unter 2 cm/s. Dies ermöglicht eine hochwertige Überwachung der Nachtdurchflüsse in ausgewählten Messpositionen im Verteilnetz. Bereits geringe Wasserverlustmengen werden angezeigt. Dies ermöglicht die Detektion von Leckagen bereits frühzeitig nach ihrem Entstehen. Eine deutliche Verkürzung der Lecklaufzeit wird ermöglicht. Vorzugsweise wird bei der Ermittlung der Strömungsgeschwindigkeit einmal je Sekunde ein Messwert gespeichert. Der Durchflussmesser ermittelt daraus in frei einstellbaren Messintervallen jeweils den minimal und maximal aufgetretenen Durchfluss sowie einen Mittelwert. Der Betrieb der Messeinheiten kann auf ca. ein bis zwei Stunden täglich beschränkt werden. Als geeignete Messzeit hat sich der Zeitraum zwischen 02.00 Uhr und 05.00 Uhr erwiesen. Die Datenübertragung erfolgt vorzugsweise über das GSM-Netz (Mobilfunk). Die intern errechneten Volumenströme werden in Datenpakete komprimiert und im SMS-Format versandt. Jede SMS enthält bis zu 20 Datenzeilen. Diese sind jeweils mit einem Zeitstempel versehen. Sie enthalten den im eingestellten Messintervall aufgetretenen Minimal- und Maximalwert sowie den Mittelwert. Die Mittelungsintervalle sind von einer Minute bis 60 Minuten frei einstellbar. Die Messeinheit lässt sich auch über die Datenfernübertragung parametrieren. Beispielsweise lässt sich über Ferneinstellung das Messintervall verändern. Die Datenübertragung via SMS ist sehr zuverlässig. Die einzelnen SMS werden vom Provider auch zwischengespeichert, falls die Empfangszentrale durch die Sendungen anderer Einheiten ausgelastet ist. Zur Zeitsynchronisation sendet die Empfangszentrale unabhängig vom übrigen Sendeverkehr an jede Messeinheit täglich eine SMS.

Sämtliche Daten-SMS werden an eine Empfangszentrale geleitet. Alternativ ist die zentrale Sammlung und Aufbereitung von Daten und der Abruf von Ergebnissen via Internetverbindung möglich. In der Empfangszentrale werden die Informationen in einer Datenbank gespeichert. Ein Computerprogramm, welches einen oder mehrere der oben genannten Verfahrensschritte ausführt, ist ebenfalls Gegenstand der Erfindung. Das Computerprogramm ist vorzugsweise auf einem Datenträger gespeichert. Weiterhin ist auch ein Computersystem, auf dem ein erfindungsgemäßes Computerprogramm geladen ist, Gegenstand der Erfindung. Das Computersystem kann dabei die zentrale Rechnereinheit und/oder eine in unmittelbarer Nähe zur Messeinheit befindliche Rechnereinheit sein.

Das Computerprogramm wertet die Daten nach dem oben beschriebenen Verfahren aus und stellt die Ergebnisse graphisch dar. Von Interesse ist dabei insbesondere die Identifizierung des minimal festgestellten Durchflusses an der Messstelle. Deshalb werden die Datensätze systematisch auf Minimalwerte hin untersucht. Ausreißerwerte werden identifiziert und von der Berechnung ausgeschlossen. Das Computerprogramm ermöglicht die detaillierte Auswertung einzelner Messstellen sowohl anhand der errechneten Nachtminima als auch auf Basis der aufgenommen Ausschnitte der Ganglinien. Diese werden als Kurvenschar der drei Messauswertungen (Maximal- und Minimalwert sowie Mittelwert im Messintervall) dargestellt. Daneben ermöglicht das Programm den Vergleich benachbarter Messeinheiten. Die gleichzeitige Darstellung der Messreihen erlaubt eine schnelle Übersicht über die Veränderungen der einzelnen Messpositionen gegeneinander. Zusätzlich lassen sich mehrere Messstellen "bilanziell" zusammenfassen. So entsteht eine Zonenüberwachung.

Die Anzahl der erforderlichen Messstellen hängt von der gewünschten Aussagequalität des Überwachungssystems, der Netzstruktur, insbesondere dem Vermaschungsgrad und der Verteilung der Rohrdimensionen, sowie der Möglichkeit der Ausbildung von starren Abschieberungen (statische Zonentrennung) ab.

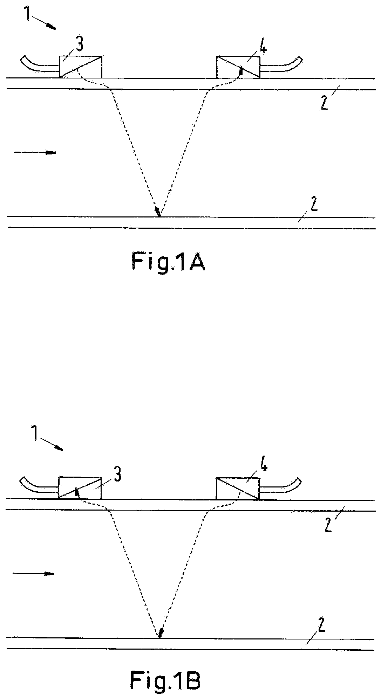

Weitere Vorteile und Einzelheiten des erfindungsgemäßen Verfahrens ergeben sich aus dem anhand der Zeichnungen beschriebenen und die Erfindung nicht einschränkenden Ausführungsbeispiel. Dabei zeigt Fig. 1 A, B die Installation von zwei Sensoren an der Außenseite eines Rohres.

Gemäß Fig. 1 A, B wird an einer ausgewählten Stelle eines Rohres 2 eines Rohrleitungsnetzes eine Messeinheit 1 positioniert. Dabei besteht eine Messeinheit 1 jeweils aus einem ersten Sensor 3 sowie einem zweiten Sensor 4, welche bei dem dargestellten Ausführungsbeispiel entlang der Rohrachse nebeneinander beabstandet auf der Außenseite des Rohres 2 angebracht sind. Beide Sensoren arbeiten entweder als Sender oder als Empfänger. Der Durchfluss des Wassers durch die Rohrleitung 2 wird mit Hilfe des Ultraschallmessverfahrens bestimmt. Dabei werden Ultraschallsignale von dem Sensor 3 gemäß Fig. 1 A ausgesandt, welche auf der gegenüberliegenden Seite des Rohres reflektiert und von dem zweiten Sensor 4 wieder empfangen werden. Dieser erste Ultraschallimpuls wird in Strömungsrichtung, welche durch den Pfeil angedeutet ist, durch die Flüssigkeit gesendet.

Gemäß Fig. 1 B wird ein zweiter Ultraschallimpuls entgegen der Strömungsrichtung von dem zweiten Sensor 4 abgesendet und nach Reflektion an der gegenüberliegenden Rohrinnenwandung von dem ersten Sensor 3 detektiert. Da das Medium, in dem sich der Ultraschall ausbreitet, fließt, ist die Laufzeit der Schallsignale, die das Medium in Flussrichtung durchlaufen, kürzer als die Laufzeit der Signale, welche es entgegen der Flussrichtung durchlaufen. Der Laufzeitunterschied Δt wird gemessen und erlaubt die Bestimmung der mittleren Strömungsgeschwindigkeit auf dem vom Schall durchlaufenen Pfad. Durch eine Profilkorrektur kann das Flächenmittel der Strömungsgeschwindigkeit errechnet werden, welches zu dem Volumenfluss proportional ist. Der Abstand der Sensoren kann beispielsweise fünf Zentimeter betragen. Optional können minimale und maximale Grenzwerte für den Durchfluss festgelegt werden, bei deren Überschreitung bzw. Unterschreitung ein Alarmsignal automatisch generiert wird. Die in einem der Messeinheit zugeordneten Durchflussmessgerät errechneten Volumenströme werden mit Hilfe eines GSM-Moduls an eine zentrale Rechnereinheit übertragen. Den Messeinheiten kann ein Schaltschrank zugeordnet sein, worin sich mindestens das GSM-Modul befindet. Weiterhin kann in diesem Schaltschrank eine SPS-Steuereinheit (Speicherprogrammierbare Steuerung) mit digitalen Ein- und Ausgangsklemmen sowie analoger Eingangsklemme, ein Betriebswahlschalter (ein, aus, Inbetriebnahme), ein Netzteil, ein Durchflussmessgerät, ein Netzanschluss, USV (eine unterbrechungsfreie Stromversorgung) sowie ein Akkupack zur Überbrückung spannungsfreier Zeiten untergebracht sein. Als Alternative zum Netzanschluss kann die Energieversorgung auch durch ein Solarpanel (Solarmodul, Photovoltaikmodul oder Solargenerator) oder über eine Nachtspeisung durch die Straßenbeleuchtung erfolgen. Bei der letztgenannten Möglichkeit werden Akkus nachts über einen Anschluss an eine Straßenlaterne aufgeladen.

### Bezugszeichenliste

- 1: Messeinheit
- 2: Rohr
- 3: erster Sensor
- 4: zweiter Sensor

## Patentansprüche

1. Verfahren zur Überwachung und/oder Ortung von Wasserverlusten in einem Wasserrohrleitungsnetz mit mehreren Ganglinien, **dadurch gekennzeichnet, dass** das Verfahren mindestens die folgenden Schritte umfasst :
- Positionierung von Messeinheiten an ausgewählten Stellen des Rohrleitungsnetzes, wobei eine Messeinheit (1) jeweils aus zwei gleichzeitig als Sender und Empfänger arbeitenden Sensoren (3, 4) besteht, welche entlang der Rohrachse auf der Außenseite, vorzugsweise auf Kämpferhöhe, eines Rohres (2) angebracht sind,
- Messung der Strömungsgeschwindigkeit der Flüssigkeit im Rohr mit Hilfe eines Ultraschallmessverfahrens, bei dem ein erster Ultraschallimpuls durch die Flüssigkeit in Strömungsrichtung sowie ein zweiter Ultraschallimpuls entgegen der Strömungsrichtung gesendet wird, die Sensoren abwechselnd als Sender und Empfänger arbeiten und die Strömungsgeschwindigkeit aus der Laufzeitdifferenz Δt der Schallsignale in Strömungsrichtung und der Schallsignale entgegen der Strömungsrichtung bestimmt wird,
- Übertragung der Messdaten an eine Datenbank einer zentralen Rechnereinheit mit Hilfe eines an die jeweilige Messeinheit angeschlossenen Datenübertragungsmoduls und,
- Auswertung der Messdaten in der zentralen Rechnereinheit, indem die Messdaten der Ganglinien mit einem charakteristischen Minimum ausgewertet werden, wobei die Ganglinien auf minimal gemessene Werte hin untersucht werden, und die so identifizierten Wasserbewegungen auf Leckverluste hinweisen.

2. Verfahren nach Anspruch 1, **dadurch gekennzeichnet, dass** Aussagen zum Netzzustand und/oder seine Veränderungen erfolgen und/oder eine Quantifizierung der Leckagemengen erfolgt, indem die Messdaten der einzelnen Messeinheiten und/oder davon abgeleitete Daten mit in der Vergangenheit aufgenommenen Messdaten verglichen werden.

3. Verfahren nach Anspruch 2, **dadurch gekennzeichnet, dass** die Übertragung der Messdaten vom Datenübertragungsmodul an eine zentrale Rechnereinheit über ein öffentliches Mobilfunknetz (GSM) erfolgt.

4. Verfahren nach Anspruch 3, **dadurch gekennzeichnet, dass** die Lage der Leckstelle auf einen Teilbereich des Rohrleitungsnetzes örtlich eingegrenzt wird, indem Messdaten benachbarter Messeinheiten gemeinsam ausgewertet werden.

5. Verfahren nach Anspruch 4, **dadurch gekennzeichnet, dass** Messeinheiten in einem Abstand von 5 bis 20 km im Rohrleitungssystem angebracht sind.

6. Verfahren nach Anspruch 5, **dadurch gekennzeichnet, dass** die Strömungsgeschwindigkeit im Rohr permanent gemessen wird.

7. Verfahren nach Anspruch 6, **dadurch gekennzeichnet, dass** aus den Messdaten der Messeinheiten jeweils der minimal und maximal aufgetretene Flüssigkeitsdurchfluss sowie ein Mittelwert ermittelt werden.

8. Verfahren nach Anspruch 7, **dadurch gekennzeichnet, dass** in einer Rechnereinheit an der Messeinheit die Volumenströme berechnet und als komprimierte mit einem Zeitstempel versehene Datenpakete im SMS-Format an die zentrale Rechnereinheit versandt werden.

9. Verfahren nach Anspruch 8, **dadurch gekennzeichnet, dass** alle Daten-SMS an eine Empfangszentrale geleitet werden oder dass die zentrale Sammlung und Aufbereitung von Daten und/oder der Abruf von Ergebnissen via Internet-Verbindung erfolgt.

10. Verfahren nach Anspruch 9, **dadurch gekennzeichnet, dass** nach der Identifizierung und groben Ortung eines Flüssigkeitsverlusts im Rohrleitungsnetz in einer zweiten Stufe eine weitere örtliche Eingrenzung einer Leckage mit Hilfe einer flächigen Geräuschpegelmessung in dem als potenziellem Leckbereich ausgewiesenen Teil des Rohrleitungsnetzes vorgenommen wird.

11. Verfahren nach Anspruch 10, **dadurch gekennzeichnet, dass** in einer dritten Stufe die Einortung der Leckstelle in dem weitestgehend eingegrenzten Netzbereich mit weiteren Verfahren der Leckortung, vorzugsweise der Korrelation, erfolgt.

12. Computerprogramm zur Ausführung eines Verfahrens gemäß einem der Ansprüche 1 bis 11.

13. Datenträger mit einem Computerprogramm nach Anspruch 12.

14. Computersystem, auf dem ein Computerprogramm nach Anspruch 12 geladen ist.

15. System zur Überwachung und/oder Ortung von Wasserverlusten in einem Wasserrohrleitungsnetz mit mehreren Ganglinien, **dadurch gekennzeichnet, dass** das System mindestens die folgenden Komponenten aufweist:
- eine oder mehrere an ausgewählten Stellen des Rohrleitungsnetzes positionierte Messeinheiten (1), die jeweils aus zwei gleichzeitig als Sender und Empfänger arbeitenden Sensoren (3, 4) bestehen, welche entlang der Rohrachse auf der Außenseite, vorzugsweise auf Kämpferhöhe eines Rohres (2), angebracht sind, und die Messeinheiten zur Messung der Strömungsgeschwindigkeit der Flüssigkeit im Rohr mit Hilfe eines Ultraschallmessverfahrens geeignet sind, bei dem ein erster Ultraschallimpuls durch die Flüssigkeit in Strömungsrichtung sowie ein zweiter Ultraschallimpuls entgegen der Strömungsrichtung gesendet wird, die Sensoren abwechselnd als Sender und Empfänger arbeiten und die Strömungsgeschwindigkeit aus der Laufzeitdifferenz Δt der Schallsignale in Strömungsrichtung und der Schallsignale entgegen der Strömungsrichtung bestimmt wird,
- ein an die jeweilige Messeinheit angeschlossenes Datenübertragungsmodul,
- eine in einer zentralen Rechnereinheit vorgesehene Datenbank, an die die Messdaten mit Hilfe des Datenübertragungsmoduls übertragbar sind, und
- ein Modul zur Auswertung der Messdaten in der zentralen Rechnereinheit, wobei die Messdaten der Ganglinien mit einem charakteristischen Minimum ausgewertet werden, wobei die Ganglinien auf minimal gemessene Werte hin untersucht und so identifizierte Wasserbewegungen auf Leckverluste hinweisen.

## Claims

1. Method for monitoring and/or locating water losses in a water pipe network comprising a plurality of hydrographs, **characterised in that** the method comprises at least the following steps:
- positioning measuring units at selected points of the pipe network, each measuring unit (1) consisting of two sensors (3, 4) which operate simultaneously as a transmitter and a receiver and are attached to the outer face of a pipe (2) along the pipe axis, preferably at the springing height,
- measuring the flow velocity of the fluid in the pipe by means of an ultrasonic measuring method, in which method a first ultrasonic pulse is transmitted through the liquid in the flow direction and a second ultrasonic pulse is transmitted counter to the flow direction, the sensors operate alternately as a transmitter and a receiver, and the flow velocity is determined from the transit time difference Δt between the ultrasonic signals in the flow direction and the ultrasonic signals counter to the flow direction,
- transmitting the measured data to a database of a central processing unit by means of a data transfer module connected to the respective measuring units and,
- analysing the measured data in the central processing unit by analysing the measured data of the hydrographs using a characteristic minimum, the hydrographs being examined for minimum measured values, and the water movements thus identified indicating leakage losses.

2. Method according to claim 1, **characterised in that** the statements regarding the condition of the network and/or its changes, and/or a quantification of the leakage quantities are made **in that** the measured data of the individual measuring units and/or data derived therefrom are compared with data recorded in the past.

3. Method according to claim 2, **characterised in that** the measured data are transmitted from the data transfer module to a central processing unit over a public mobile network (GSM).

4. Method according to claim 3, **characterised in that** the position of the leak is locally isolated to a portion of the pipe network by means of the measured data from adjacent measuring units being analysed together.

5. Method according to claim 4, **characterised in that** measuring units are attached to the pipe system at spacings of between 5 and 20 km.

6. Method according to claim 5, **characterised in that** the flow velocity in the pipe is constantly measured.

7. Method according to claim 6, **characterised in that** the minimum and maximum fluid flow rates that occur, and an average value, are calculated in each case from the measured data from the measuring units.

8. Method according to claim 7, **characterised in that** the volumetric flow rates are calculated in a processing unit on the measuring unit and are transmitted to the central processing unit as compressed data packages in SMS format provided with a timestamp.

9. Method according to claim 8, **characterised in that** every data SMS is sent to a central receiver, or **in that** the central collection and processing of data and/or the retrieval of results takes place via an Internet connection.

10. Method according to claim 9, **characterised in that**, after identifying and roughly locating a fluid loss in the pipe network, a leak is further isolated locally in a second step by means of a two-dimensional sound level measurement in the part of the pipe network that has been identified as the potential location of the leak.

11. Method according to claim 10, **characterised in that**, in a third step, the leakage point is located in the network region that has been isolated as far as possible, by means of further methods for leak locating, preferably correlation methods.

12. Computer program for executing a method according to any of claims 1 to 11

13. Data medium comprising a computer program according to claim 12.

14. Computer system on which a computer program according to claim 12 is loaded.

15. System for monitoring and/or locating water losses in a water pipe network comprising a plurality of hydrographs, **characterised in that** the system comprises at least the following components:
- one of more measuring units (1) that are positioned at selected points of the pipe network and each consist of two sensors (3, 4) which operate simultaneously as a transmitter and a receiver and are attached to the outer face of a pipe (2) along the pipe axis, preferably at the springing height, and the measuring units are suitable for measuring the flow velocity of the fluid in the pipe by means of an ultrasonic measuring method, in which method a first ultrasonic pulse is transmitted through the liquid in the flow direction and a second ultrasonic pulse is transmitted counter to the flow direction, the sensors operate alternately as a transmitter and a receiver, and the flow velocity is calculated from the transit time difference Δt between the ultrasonic signals in the flow direction and the ultrasonic signals counter to the flow direction,
- a data transfer module connected to the respective measuring units,
- a database that is provided in a central processing unit and to which the measured data can be transferred by means of the data transfer module, and
- a module for analysing the measured data in the central processing unit, the measured data of the hydrographs being analysed using a characteristic minimum, the hydrographs being examined for minimum measured values, and water movements thus identified indicating leakage losses.

## Revendications

1. Procédé de surveillance et/ou de localisation de pertes d'eau dans un réseau de tuyauterie d'eau à plusieurs régimes hydrographiques, **caractérisé par le fait que** le procédé comprend au moins les étapes suivantes:
- le positionnement d'unités de mesure sur des points sélectionnés du réseau de tuyauterie, dans lequel une unité de mesure (1) se compose respectivement de deux capteurs (3, 4) qui travaillent en même temps comme émetteur et comme récepteur et qui sont montés le long de l'axe de tuyau sur la face extérieure, de préférence au niveau de naissance, d'un tuyau (2),
- la mesure de la vitesse d'écoulement du liquide dans le tuyau à l'aide d'un procédé de mesure par ultrasons dans lequel une première impulsion ultrasonore est émise à travers le liquide dans la direction d'écoulement ainsi qu'une deuxième impulsion ultrasonore est émise à l'encontre de la direction d'écoulement, les capteurs travaillent alternativement comme émetteur et comme récepteur, et la vitesse d'écoulement est déterminée à partir de la différence de temps de propagation Δt des signaux sonores dans la direction d'écoulement et des signaux sonores à l'encontre de la direction d'écoulement,
- la transmission des données de mesure à une banque de données d'une unité informatique centrale à l'aide d'un module de transmission de données qui est connecté à l'unité de mesure respective, et,
- l'évaluation des données de mesure dans l'unité informatique centrale en évaluant les données de mesure des régimes hydrographiques avec un minimum caractéristique, les régimes hydrographiques étant analysés quant à des valeurs minimales mesurées et les mouvements d'eau ainsi identifiés indiquant des pertes de fuite.

2. Procédé selon la revendication 1, **caractérisé par le fait que** des informations sur l'état du réseau et/ou les modifications de celui-ci sont données et/ou une quantification des quantités de fuite est faite en comparant les données de mesure des unités de mesure individuelles et/ou des données en dérivées à des données de mesure relevées dans le passé.

3. Procédé selon la revendication 2, **caractérisé par le fait que** la transmission des données de mesure depuis le module de transmission de données à une unité informatique centrale se fait via un réseau public de téléphonie mobile (GSM).

4. Procédé selon la revendication 3, **caractérisé par le fait que** la position de l'endroit de fuite est délimitée localement à une zone partielle du réseau de tuyauterie en évaluant en commun des données de mesure d'unités de mesure voisines.

5. Procédé selon la revendication 4, **caractérisé par le fait que** des unités de mesure sont mises en place dans le système de tuyauterie à une distance comprise entre 5 et 20 km.

6. Procédé selon la revendication 5, **caractérisé par le fait que** la vitesse d'écoulement dans le tuyau est mesurée en permanence.

7. Procédé selon la revendication 6, **caractérisé par le fait que** l'on détermine, à partir des données de mesure des unités de mesure, le débit de liquide qui s'est produit respectivement au minimum et au maximum ainsi qu'une valeur moyenne.

8. Procédé selon la revendication 7, **caractérisé par le fait que** les débits volumiques sont calculés dans une unité informatique au niveau de l'unité de mesure et sont envoyés en tant que paquets de données comprimés munis d'un timbre horodateur, au format SMS, à l'unité informatique centrale.

9. Procédé selon la revendication 8, **caractérisé par le fait que** l'ensemble des SMS de données est transmis à une centrale de réception ou que la collecte centrale et la préparation de données et/ou l'interrogation de résultats se font via une liaison internet.

10. Procédé selon la revendication 9, **caractérisé par le fait que**, après l'indentification et la localisation grossière d'une perte de liquide à l'intérieur du réseau de tuyauterie, on procède, dans une deuxième étape, à une autre délimitation locale d'une fuite à l'aide d'une mesure plane du niveau de bruit dans la partie du réseau de tuyauterie qui s'est révélée être la zone potentielle de fuite.

11. Procédé selon la revendication 10, **caractérisé par le fait que**, dans une troisième étape, la localisation de l'endroit de fuite dans la zone de réseau dans une large mesure délimitée est réalisée au moyen d'autres procédés de localisation de fuite, de préférence la corrélation.

12. Programme informatique pour la mise en oeuvre d'un procédé selon l'une quelconque des revendications 1 à 11.

13. Support de données comprenant un programme informatique selon la revendication 12.

14. Système informatique sur lequel est chargé un programme informatique selon la revendication 12.

15. Système de surveillance et/ou de localisation de pertes d'eau dans un réseau de tuyauterie d'eau à plusieurs régimes hydrographiques, **caractérisé par le fait que** le système comprend au moins les composants suivants:
- une ou plusieurs unités de mesure (1) positionnées sur des points sélectionnés du réseau de tuyauterie, qui se composent chacune de deux capteurs (3, 4) qui travaillent en même temps comme émetteur et comme récepteur et qui sont montés le long de l'axe de tuyau sur la face extérieure, de préférence au niveau de naissance, d'un tuyau (2), et les unités de mesure sont aptes à mesurer la vitesse d'écoulement du liquide dans le tuyau à l'aide d'un procédé de mesure par ultrasons dans lequel une première impulsion ultrasonore est émise à travers le liquide dans la direction d'écoulement ainsi qu'une deuxième impulsion ultrasonore est émise à l'encontre de la direction d'écoulement, les capteurs travaillent alternativement comme émetteur et comme récepteur, et la vitesse d'écoulement est déterminée à partir de la différence de temps de propagation Δt des signaux sonores dans la direction d'écoulement et des signaux sonores à l'encontre de la direction d'écoulement,
- un module de transmission de données qui est connecté à l'unité de mesure respective,
- une banque de données qui est prévue dans une unité informatique centrale et à laquelle les données de mesure peuvent être transmises à l'aide dudit module de transmission de données, et
- un module d'évaluation des données de mesure dans l'unité informatique centrale, les données de mesure des régimes hydrographiques étant évaluées avec un minimum caractéristique, les régimes hydrographiques étant analysés quant à des valeurs minimales mesurées et des mouvements d'eau ainsi identifiés indiquant des pertes de fuite.
